(19) Europäisches Patentamt

European Patent Office

Office européen des brevets

(11) **EP 1 443 526 A2**

(12) **EUROPEAN PATENT APPLICATION**

(43) Date of publication:
**04.08.2004 Bulletin 2004/32**

(51) Int Cl.$^7$: **G21K 4/00**

(21) Application number: **04001683.4**

(22) Date of filing: **27.01.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **28.01.2003 JP 2003018564**

(71) Applicant: **KONICA MINOLTA HOLDINGS, INC.
Tokyo 100-0005 (JP)**

(72) Inventors:
• **Nakano, Kuniaki
  Hino-shi Tokyo 191-8511 (JP)**
• **Honda, Satoshi
  Hino-shi Tokyo 191-8511 (JP)**
• **Morikawa, Osamu
  Hino-shi Tokyo 191-8511 (JP)**

(74) Representative: **Henkel, Feiler & Hänzel
Möhlstrasse 37
81675 München (DE)**

(54) **Radiographic image conversion panel**

(57)    A radiographic image conversion panel includes: a support; and at least one photostimulable phosphor layer provided on the support, wherein the photostimulable phosphor layer comprises a photostimulable phosphor having a columnar crystal structure, and the number N of columnar crystals per 100 $\mu m^2$ of the surface area of the photostimulable phosphor layer satisfies a following Formula (1): $50 \leq N \leq 4000$.

*FIG.1*

EP 1 443 526 A2

**Description**

BACKGROUND OF THE INVENTION

Technical Field

The present invention relates to a radiographic image conversion panel.

Description of Related Art

Recently, a method for imaging a radiological image by a radiographic image conversion panel using a photostimulable phosphor is used.

As such a method, there is a method for using a radiographic image conversion panel comprising a support having formed thereon a photostimulable phosphor layer (for example, see U. S. Patent No. 3,859,527 and Japanese Patent Application Publication (Unexamined) Tokukaisho 55-12144).

The photostimulable phosphor layer of such a radiographic image conversion panel is irradiated with radiation rays which are transmitted through a subject to accumulate radiographic energy in accordance with radiation transmittance of every site of the subject so as to build a latent image (an accumulated image), and then scanned with photostimulated excitation light (a laser beam is used) to make radiation energy accumulated in each site emit. The emitted radiation energy is converted to light, and then the strength and weakness of this light is read out to obtain an image. This image may be reproduced on various displays such as a CRT or the like, or may be reproduced as a hardcopy.

As for the photostimulable phosphor layer of the radiographic image conversion panel used in this radiographic image conversion method, it is required that not only both the absorption rate of radiation and conversion rate to light are high, but also the image is good in graininess and high in sharpness.

In general, in order to increase the radiosensitivity, it is necessary to make the photostimulable phosphor layer thicker, however, if the layer becomes too thick, there is a phenomenon that the emission of the luminescence to the outside of the layer is missed due to scattering of the photostimulated luminescence among photostimulable phosphor particles, and therefore there is a limitation on the thickness.

In addition, as for the sharpness, if the photostimulable phosphor layer is made thinner, the sharpness of the obtained image is more improved, whereas, if the layer is too thin, the decrease in sensitivity becomes large.

In addition, as for the graininess, since the image graininess is determined by the locational fluctuations of number of radiation quanta (quantum mottles), or structural disturbances of the photostimulable phosphor layer of the radiographic image conversion panel (structure mottles), the thinning of the photostimulable phosphor layer causes the increase in quantum mottles through the decrease in number of radiation quanta absorbed in the photostimulable phosphor layer, and/or the increase in structure mottles through the actualization of structural disturbances, resulting in the deterioration of the image quality. Therefore, it was necessary to make the photostimulable phosphor layer thicker for the improvement of the image graininess.

Thus, the image quality and sensitivity in the radiographic image conversion method using the radiographic image conversion panel are determined from various factors. In order to adjust a plurality of these factors relative to the sensitivity or image quality to improve the sensitivity and image quality, various studies have been heretofore made.

Among these, as a method for improving the sharpness of a radiographic image, for example, attempts for improving sensitivity and sharpness by controlling the shape itself of photostimulable phosphors formed have been made.

As one of these attempts, there is a method for using a photostimulable phosphor layer having a fine quasi-columnar block formed by depositing a photostimulable phosphor on a support having a fine concavoconvex pattern (for example, see Japanese Patent Application Publication (Unexamined) Tokukaisho 61-142497). Further, a method for using a radiographic image conversion panel having a photostimulable phosphor layer in which cracks between columnar blocks obtained by depositing a photostimulable phosphor on a support having a fine pattern are shock-treated to be further developed (for example, see Japanese Patent Application Publication (Unexamined) Tokukaisho 61-142500), further, a method for using a quasi-columnar radiographic image conversion panel in which cracks are caused from the surface side of a photostimulable phosphor layer formed on a face of a support (for example, see Japanese Patent Application Publication (Unexamined) Tokukaisho 62-3973), furthermore, a method for providing cracks by forming a photostimulable phosphor layer having a void on an upper face of a support according to deposition, and thereafter, by growing the void according to heat treatment (for example, see Japanese Patent Application Publication (Unexamined) Tokukaisho 62-110200), and the like are suggested.

Recently, a method for forming a photostimulable phosphor layer in a predetermined thickness while adjusting the crossing angle between a steam line of steam flow of a photostimulable phosphor component and a support surface to a specific range when preparing the photostimulable phosphor layer on a support by use of a vapor phase deposition method is disclosed (for example, see Japanese Patent Application Publication (Unexamined) Tokukaisho 62-157600), furthermore, a radiographic image conversion panel having a photostimulable phosphor layer in which an elongated columnar crystal having a constant slope to a normal line direction of a support is formed on the support according to a vapor phase deposition method (for example, see Japanese Patent No. 2899812) is suggested.

In these attempts of controlling a shape of the phosphor layer, improvement in image quality is aimed by allowing the phosphor layer to have a columnar crystal structure. In particularly, it is considered that since the transversal diffusion of photostimulated excitation light (or photostimulated luminescence) can be suppressed by rendering the photostimulable phosphor layer columnar (the light reaches the support surface while repeating reflection in a crack (a columnar crystal) interface) , the sharpness of an image formed by the photostimulated luminescence can be noticeably increased.

However, also in a radiographic image conversion panel having a photostimulable phosphor layer formed by the above-described vapor phase growth (deposition), higher image quality is being demanded.

SUMMARY OF THE INVENTION

The present invention has been made under these circumstances and an object of the present invention is to provide a radiographic image conversion panel having excellent luminescence intensity and exhibiting high sharpness.

In order to solve the above-described problems, according to a first aspect of the present invention, a radiographic image conversion panel comprises:

a support; and
at least one photostimulable phosphor layer provided on the support,

wherein the photostimulable phosphor layer comprises a photostimulable phosphor having a columnar crystal structure, and the number N of columnar crystals per 100 $\mu m^2$ of the surface area of the photostimulable phosphor layer satisfies a following Formula (1):

$$\text{Formula (1)}$$

$$50 \leq N \leq 4000.$$

Here, the number N of the columnar crystals preferably satisfies a following Formula (2):

$$\text{Formula (2)}$$

$$100 \leq N \leq 2000.$$

Further, the photostimulable phosphor layer having the columnar crystal structure is preferably formed by a vapor phase deposition method.

Moreover, the photostimulable phosphor layer preferably contains a photostimulable phosphor having a composition represented by a following Formula (3):

$$\text{Formula (3)}$$

$$M^{I}X \cdot aM^{II}X'_{2} \cdot bM^{III}X''_{3} : eA$$

wherein the $M^{I}$ is at least one kind of alkali metal selected from a group consisting of Li, Na, K, Rb and Cs, the $M^{II}$ is at least one kind of bivalent metal selected from a group consisting of Be, Mg, Ca, Sr, Ba, Zn, Cd and Ni, the $M^{III}$ is at least one kind of trivalent metal selected from a group consisting of Sc, Y, La, Ce, Pr, Nd, Pm, Sm, Eu, Gd, Tb, Dy, Ho, Er, Tm, Yb, Lu, Al, Ga and In, each of the X, the X' and the X'' is at least one kind of halogen selected from a group consisting of F, Cl, Br and I, the A is at least one kind of metal selected from a group consisting of Eu, Tb, In, Ga, Cs, Ce, Tm, Dy, Pr, Ho, Nd, Yb, Er, Gd, Lu, Sm, Y, Tl, Na, Ag, Cu and Mg, and each of the a, the b and the e represents a numeric value in a range of $0 \leq a < 0.5$, $0 \leq b < 0.5$ and $0 < e \leq 0.2$.

Herein, the $M^I$ in Formula (3) above is preferably at least one kind of alkali metal selected from a group consisting of K, Rb and Cs.

Further, the X in Formula (3) above is preferably Br or I.

Further, the $M^{II}$ in the Formula (3) is preferably at least one kind of bivalent metal selected from a group consisting of Be, Mg, Ca, Sr and Ba.

Further, the $M^{III}$ in the Formula (3) is preferably at least one kind of trivalent metal selected from a group consisting of Y, La, Ce, Sm, Eu, Gd, Lu, Al, Ga and In.

Further, the b in the Formula (3) is preferably in a range of $0 \leq b \leq 10^{-2}$.

Further, the A in the Formula (3) is preferably at least one kind of metal selected from a group consisting of Eu, Cs, Sm, Tl and Na.

Further, the photostimulable phosphor layer preferably contains a photostimulable phosphor having a composition represented by a following Formula (4):

$$\text{Formula (4)}$$

$$CsBr:yEu$$

wherein the y represents a numeric value in a range of $1 \times 10^{-7}$ to $1 \times 10^{-2}$.

Further, a growth angle of the columnar crystals is preferably from 0° to 40°.

Here, the growth angle means a slope, to the normal line direction of a support surface, of a columnar crystal growing by making a photostimulable phosphor or raw materials of the photostimulable phosphor incident at a particular incident angle with respect to the normal line direction of the support surface on which a photostimulable phosphor layer is to be formed.

Further, a growth angle of the columnar crystals is preferably from 0° to 35°.

According to the first aspect of the present invention, a radiographic image conversion panel having excellent luminescence intensity and exhibiting high sharpness can be provided.

BRIEF DESCRIPTION OF THE DRAWINGS

The present invention will become more fully understood from the detailed description given hereinbelow and the appended drawings. However, these are not intended as a definition of the limits of the present invention, and wherein;

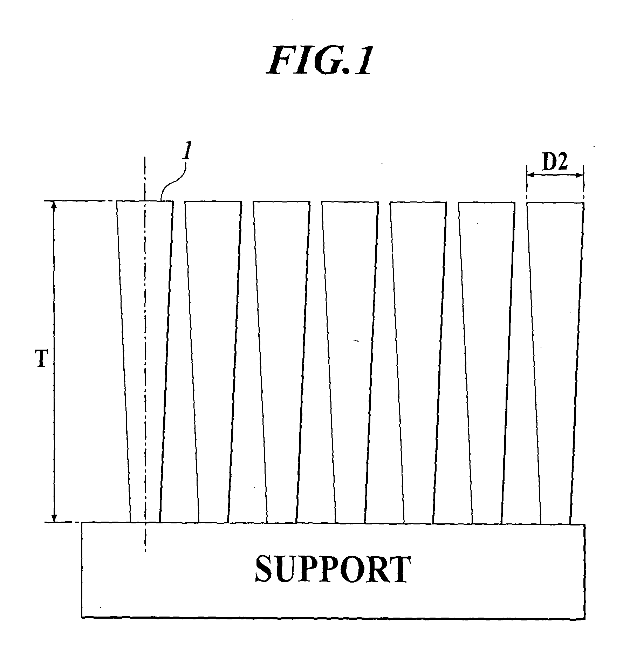

FIG. 1 is a schematic view showing a mode of a photostimulable phosphor layer having a columnar crystal structure.

PREFERRED EMBODIMENTS OF THE INVENTION

Hereinafter, the present invention will be described in detail.

The present inventors have considered various problems described above. As a result, the inventors have found that as described in the Summary, in a radiographic image conversion panel comprising a support and at least a photostimulable phosphor layer on the support, by adjusting the photostimulable phosphor layer so as to contain a photostimulable phosphor having a columnar crystal structure, and the number N of columnar crystals per 100 $\mu m^2$ of the surface area of the layer to satisfy the following Formula (1):

Formula (1)

$50 \leq N \leq 4000$, a radiographic image conversion panel having excellent luminescence intensity and exhibiting high sharpness can be obtained.

[Photostimulable Phosphor Layer]

The photostimulable phosphor layer according to the present invention will be explained.

As the photostimulable phosphor used for the photostimulable phosphor layer according to the present invention, preferred is the alkali halide photostimulable phosphor having a composition represented by the following Formula (3):

Formula (3)

$$M^{I}X \cdot aM^{II}X'_{2} \cdot bM^{III}X''_{3}{:}eA.$$

In this case, the $M^{I}$ is at least one kind of alkali metal selected from a group consisting of Li, Na, K, Rb and Cs, particularly preferably at least one kind of alkali metal selected from a group consisting of K, Rb and Cs.

The $M^{II}$ is at least one kind of bivalent metal selected from a group consisting of Be, Mg, Ca, Sr, Ba, Zn, Cd and Ni, particularly preferably at least one kind of bivalent metal selected from a group consisting of Be, Mg, Ca, Sr and Ba.

The $M^{III}$ is at least one kind of trivalent metal selected from a group consisting of Sc, Y, La, Ce, Pr, Nd, Pm, Sm, Eu, Gd, Tb, Dy, Ho, Er, Tm, Yb, Lu, Al, Ga and In, particularly preferably at least one kind of trivalent metal selected from a group consisting of Y, La, Ce, Sm, Eu, Gd, Lu, Al, Ga and In.

Each of the X, the X' and the X'' is at least one kind of halogen selected from a group consisting of F, Cl, Br and I. Among these, the X is particularly preferably Br or I.

The A is at least one kind of metal selected from a group consisting of Eu, Tb, In, Ga, Cs, Ce, Tm, Dy, Pr, Ho, Nd, Yb, Er, Gd, Lu, Sm, Y, Tl, Na, Ag, Cu and Mg, particularly preferably at least one kind of metal selected from a group consisting of Eu, Cs, Sm, Tl and Na.

Each of the a, the b and the e represents a numeric value in a range of $0 \le a < 0.5$, $0 \le b < 0.5$ and $0 < e \le 0.2$, among these, the b is particularly preferably in a range of $0 \le b \le 10^{-2}$.

In the description above, the photostimulable phosphor is particularly preferably the one represented by the following Formula (4):

Formula (4)

CsBr:yEu

wherein the y represents a numeric value in a range of $1 \times 10^{-7}$ to $1 \times 10^{-2}$.

The photostimulable phosphor having a composition represented by Formula (4) has large X-ray absorption so that higher sensitivity can be achieved, and therefore, both high sensitivity and high sharpness can be secured by forming a columnar crystal under a precise control.

Further, in preparation of the above-described photostimulable phosphors represented by the above Formulae (3), (4) and the like, materials described in Japanese Patent Application Publications Tokukaihei 7-84589, 7-74334, 7-84591, 5-01475 and the like can be used for producing the phosphors.

The photostimulable phosphor layer according to the present invention has a columnar crystal structure. The columnar crystals preferably have a crystal structure where each of the crystals is independent and grown at certain spaces. Here, as a method for growing crystals so as to have a columnar crystal structure where each of the crystals is independent at certain spaces, for example, a method described in Japanese Patent No. 2899812 can be referred. Further, in order to obtain effects described in the present invention, essential requirements of the columnar crystal structure according to the present invention are that the number N of columnar crystals per 100 $\mu m^2$ of the surface area of the photostimulable phosphor layer satisfies the Formula (1) above, preferably satisfies the following Formula (2):

Formula (2)

$$100 \le N \le 2000.$$

Such a photostimulable phosphor layer that has a columnar crystal structure as described above, and the number N of columnar crystals per 100 $\mu m^2$ of the surface area of the photostimulable phosphor layer to satisfy Formula (1) is preferably prepared by a vapor phase deposition method.

[Preparation of Photostimulable Phosphor Layer according to Vapor Phase Deposition Method]

As a method for vapor-phase growing (vapor phase deposition method) a photostimulable phosphor to a columnar crystal, a deposition method, a sputtering method, a CVD method and the like can be preferably used.

The vapor phase deposition method is a method for vapor-phase growing (referred to as a vapor phase deposition method) crystals on a support by supplying vapor of a photostimulable phosphor or raw materials therefor to the support at a particular incident angle. By this method, a photostimulable phosphor layer having separate, oblong columnar crystal structures can be obtained and also, columnar crystals can be grown at the growth angle which is about half with respect to the incident angle of photostimulable phosphor vapor flow during deposition. Herein, the growth angle of columnar crystals means a slope, to a normal line direction of a support surface, of columnar crystals growing by making a photostimulable phosphor or raw materials therefor incident at a particular incident angle with respect to the normal line direction of the support surface on which a photostimulable phosphor layer is to be formed. Specifically, the growth angle is, for example, preferably 0° to 40°, more preferably 0° to 35°. Namely, this is because when the growth angle exceeds 40°, it becomes difficult to fully secure both the sensitivity and the sharpness of the radiographic image conversion panel.

Methods for supplying a vapor flow of a photostimulable phosphor or raw materials therefor to a support at a certain angle of incidence with respect to the support surface include a method of taking an arrangement where a support is inclined with respect to a crucible charged with an evaporation source, and a method where a support and a crucible are both placed parallel to each other and the oblique component alone of a vapor flow is deposited on the support through a slit or the like from an evaporation face of the crucible charged with an evaporation source.

In these cases, it is preferable to place the support and the crucible at the shortest distance of about 10 cm to 60 cm according to the average flight distance of the photostimulable phosphor.

(Setting of Support Temperature, Surface Roughness of Support, Degree of Vacuum and the like)

The thickness of the above-described columnar crystal is affected by a support temperature, a degree of vacuum in a vapor phase growth apparatus, an incident angle of a vapor flow and the like. By controlling these, a columnar crystal having a desired thickness can be prepared.

(a) Support Temperature

As for the support temperature, there is a tendency that as the temperature is more lowered, the thickness of the columnar crystal is more decreased, that is, the number N of the columnar crystals per 100 $\mu m^2$ of the surface area of a photostimulable phosphor layer is more increased. Here, the support temperature is preferably 50°C to 350°C, more preferably 50°C to 250°C.

(b) Degree of Vacuum

As for the degree of vacuum, there is a tendency that as the degree of vacuum is more lowered, the thickness of the columnar crystal is more decreased, that is, the number N of the columnar crystals per 100 $\mu m^2$ of the surface area of a photostimulable phosphor layer is more increased. Specifically, the degree of vacuum is preferably in the range of $5 \times 10^{-5}$ Pa to 1 Pa, more preferably in the range of $1 \times 10^{-4}$ Pa to 0.5 Pa.

(c) Surface Roughness Ra of Support (a value specified in JIS B 0601)

As for the surface roughness of a support, there is a tendency that as the smoothness is more increased, the thickness of the columnar crystal is more decreased, that is, the number N of the columnar crystals per 100 $\mu m^2$ of the surface area of a photostimulable phosphor layer is more increased. Specifically, the surface roughness Ra of the support is preferably 0.5 or less, more preferably 0.1 or less.

Further, by appropriately changing the combination of the above-described support temperature, degree of vacuum and the like during deposition, the number N of the columnar crystals per 100 $\mu m^2$ of the surface area of a photostimulable phosphor layer can be more suitably controlled.

In the photostimulable phosphor layer comprising these columnar crystals, the size of columnar crystals (the average of diameters in the cross sectional area of each columnar crystal in terms of a circle at the time of observing the columnar crystals from the face parallel to the support, and it is calculated from a microphotograph bringing at least 100 or more columnar crystals into view) is preferably approximately from 1 $\mu m$ to 50 $\mu m$, further preferably from 1 $\mu m$ to 30 $\mu m$ in order to improve the modulation transfer function (MTF). More specifically, when the columnar crystal has a size of less than 1 $\mu m$, the MTF is lowered because the photostimulated excitation light is scattered due to the columnar crystal. Also, when the columnar crystal has a size of 50 μm or more, the directivity of the photostimulated excitation light decreases, thus causing MTF reduction.

Further, the size of voids among respective columnar crystals is preferably 30 μm or less, more preferably 5 μm or less. That is, when the size of voids exceeds 30 μm, the packing ratio of the phosphor in the phosphor layer is lowered, leading to sensitivity reduction.

(Deposition Method)

In the deposition method, a support is placed in a deposition apparatus; the apparatus is then degassed to a degree of vacuum of approximately $1.0 \times 10^{-4}$ Pa; then, at least one of photostimulable phosphors is heated and evaporated by a method such as resistive heating, electron beam method or the like to obliquely deposit the photostimulable phosphor on the surface of the support to a desired thickness. As a result, a photostimulable phosphor layer containing no binder is formed. In the above-described deposition step, it is also possible to form a photostimulable phosphor layer in plural numbers. Further, in the above-described deposition step, it is also possible to perform deposition by using a plurality of resistance heaters or electron beams. Further, in the deposition method, it is also possible to deposit raw materials for photostimulable phosphor by using a plurality of resistance heaters or electron beams and to form a photostimulable phosphor layer simultaneously by synthesizing the aimed photostimulable phosphor on the support. Moreover, in the deposition method, the subject of deposition may be cooled or heated during the deposition, according to need. Further, heat treatment may be performed to the photostimulable phosphor layer after the deposition is terminated.

Further, the opening restrictor of an exhaust valve in the deposition apparatus is adjusted. The deposition may be performed at a degree of vacuum of $1 \times 10^{-4}$ Pa to 1 Pa while introducing gas such as nitrogen gas, argon gas or the like during the deposition.

(Sputtering Method)

In the sputtering method, similar to the above-described deposition method, a support is placed in a sputtering apparatus; the apparatus is then degassed to a degree of vacuum of approximately $1.333 \times 10^{-4}$ Pa; then, an inert gas such as Ar, Ne or the like is introduced into the apparatus as gas for sputtering; and a gas pressure is made to approximately $1.333 \times 10^{-1}$ Pa. Next, oblique sputtering is performed by using the photostimulable phosphor as a target, and the photostimulable phosphor is obliquely deposited on the surface of the support to a desired thickness. In this sputtering step, similar to the deposition method, it is possible to form a photostimulable phosphor layer in plural numbers, or it is possible to form a photostimulable phosphor layer by using each of the photostimulable phosphor and by sputtering simultaneously or sequentially the target. Further, in the sputtering method, it is possible to form the aimed photostimulable phosphor layer on a support by using a plurality of raw materials for photostimulable phosphor as a target and by sputtering simultaneously or sequentially these materials. According to need, reactive sputtering may also be performed by introducing gas such as $O_2$, $H_2$ or the like. Moreover, in the sputtering method, the subject of deposition may be cooled or heated during the sputtering according to need. Further, heat treatment may also be performed to the photostimulable phosphor layer after the sputtering is terminated.

(CVD method)

In the CVD method, a photostimulable phosphor layer containing no binder is obtained on a support by decomposing an organic metal compound containing the aimed photostimulable phosphor or raw materials therefor with energy such as heat, high frequency electric power, or the like. In any method, it is possible to permit vapor phase growth of a photostimulable phosphor layer to separate, oblong, columnar crystals at a particular slope with respect to the normal line direction of the support.

(Film Thickness of Photostimulable Phosphor Layer)

Although the thickness of the photostimulable phosphor layer formed according to these methods changes according to the sensitivity for radiation rays of the aimed radiographic image conversion panel, the type of the photostimulable phosphor, and the like, it is preferably in the range of 10 μm to 1000 μm, more preferably in the range of 20 μm to 800 μm.

Further, the photostimulable phosphor to be used as an evaporation source is fed into a crucible after being uniformly dissolved or being shaped using a press or hot press at the time of preparing a photostimulable phosphor layer using the above-described vapor phase deposition method. At that time, it is preferable to conduct degassing. The photostimulable phosphor is evaporated from the evaporation source by scanning with an electron beam emitted from an electron gun, however, other methods may be used to evaporate the phosphor.

The evaporation source should not necessarily be a photostimulable phosphor, and may be a mixture of raw materials for a photostimulable phosphor.

Further, as for an activator, a mixture obtained by mixing an activator in a basic substance may be deposited, or an activator may be doped after depositing only a basic substance. For example, Tl as an activator may be doped after the deposition of the basic substance RbBr alone. This is because satisfactory doping is possible even when the layer is thick, since the crystals are separate from each other, and MTF does not decrease since crystal growth is unlikely to occur.

The doping agent (activator) may be doped into the formed phosphor basic substance layer by a heat-diffusion or ion plating method.

Here, formation of the photostimulable phosphor layer according to the present invention will be explained by referring to FIG. 1.

FIG. 1 is a schematic view of the photostimulable phosphor layer having the columnar crystal structure according to the present invention.

FIG. 1 shows a case where a columnar crystal 1 is uprightly formed on a support. T represents a length of the columnar crystal 1, and 0.1T represents a site only at the distance of 1/10 of the length T in the columnar crystal 1 from the support. D2 represents a size of the columnar crystal 1 in the outermost face of the columnar crystal 1 (represents a thickness of the column), and D1 represents a thickness of the columnar crystal 1 in the site only at the distance of 0.1T from the support. Further, as shown in FIG. 1, when the columnar crystal grows uprightly, the incident angle on the support surface of the vapor flow of photostimulable phosphor raw materials is nearly 0°.

The photostimulable phosphor layer formed on the support in such a manner does not contain any binder. Therefore, it is excellent in directivity, and the directivity of photostimulated excitation light and photostimulated luminescence is high. Thereby, it is possible to make the layer thickness thicker than that of the radiographic image conversion panel having a dispersion type photostimulable phosphor layer, in which a photostimulable phosphor is dispersed in a binder. Furthermore, since scattering of photostimulated excitation light in the photostimulable phosphor layer decreases, the sharpness of image improves.

Further, a filling material such as a binder or the like may be filled in voids among columnar crystals so as to reinforce the photostimulable phosphor layer. Further, materials having high optical absorption, materials having high optical reflectance, and the like may be filled. Thereby, the above-described reinforcement effect can be obtained, and moreover, optical dispersion in the transverse direction of the photostimulated excitation light made incident on the photostimulable phosphor layer can be almost completely prevented.

The materials having high optical reflectance mean the ones having high reflectance in response to the photostimulated excitation light (500 nm to 900 nm, particularly, 600 nm to 800 nm). For example, metals such as aluminum, magnesium, silver, indium and the like, white pigments and coloring materials from green to red region can be used.

The white pigments can also reflect photostimulated luminescence. As the white pigments, $TiO_2$ (anatase type, rutile type), MgO, $PbCO_3 \cdot Pb(OH)_2$, $BaSO_4$, $Al_2O_3$, M(II)FX (wherein M(II) is at least one of Ba, Sr and Ca and X is at least one of Cl and Br), $CaCO_3$, ZnO, $Sb_2O_3$, $SiO_2$, $ZrO_2$, lithopone ($BaSO_4 \cdot ZnS$), magnesium silicate, basic lead silicosulfate, basic lead phosphate, aluminum silicate and the like can be given. These white pigments have a strong covering power and a large refractive index. Therefore, the photostimulated luminescence can be scattered easily by reflecting and refracting light, so that it is possible to improve remarkably the sensitivity of the obtained radiographic image conversion panel.

Further, as the materials having high optical absorption, for example, carbon, chromium oxide, nickel oxide, iron oxide and the like, and coloring material of blue can be used. Among these, carbon also absorbs the photostimulated luminescence.

Further, the coloring materials may be either organic or inorganic system coloring materials. As the organic system coloring materials, Zabon Fast Blue 3G (produced by Hoechst), Estrol Brill Blue N-3RL (produced by Sumitomo Chemical), D & C Blue No. 1 (produced by National Aniline), Spirit Blue (produced by Hodogaya Chemical), Oil Blue No. 603 (produced by Orient), Kiton Blue A (produced by Chiba-Geigy), Aizen Catiron Blue GLH (produced by Hodogaya Chemical), Lake Blue AFH (produced by Kyowa Sangyo), Primocyanine 6GX (produced by Inabata & Co.), Brill Acid Green 6BH (produced by Hodogaya Chemical), Cyan Blue BNRCS (produced by Toyo Ink), Lionoil Blue SL (produced by Toyo Ink) and the like are used. Further, organic system metal complex salt coloring materials such as color index Nos. 24411, 23160, 74180, 74200, 22800, 23154, 23155, 24401, 14830, 15050, 15760, 15707, 17941, 74220, 13425, 13361, 13420, 11836, 74140, 74380, 74350, 74460 and the like can be given. As the inorganic system coloring materials, permanent blue, cobalt blue, cerulean blue, chromium oxide, $TiO_2$-ZnO-Co-NiO system pigments can be given.

Examples of the photostimulable phosphor used for the radiographic image conversion panel of the present invention include the phosphor represented by $BaSO_4$:Ax, described in Japanese Patent Application Publication (Unexamined) Tokukaisho 48-80487, the phosphor represented by $MgSO_4$:Ax, described in Japanese Patent Application Publication (Unexamined) Tokukaisho 48-80488, the phosphor represented by $SrSO_4$:Ax, described in Japanese Patent Application Publication (Unexamined) Tokukaisho 48-80489, the phosphor obtained by adding at least one of Mn, Dy, and Tb to $Na_2SO_4$, $CaSO_4$, $BaSO_4$ etc. , described in Japanese Patent Application Publication (Unexamined) Tokukaisho 51-29889, the phosphor such as BeO, LiF, $MgSO_4$, $CaF_2$ etc., described in Japanese Patent Application Publication (Unexamined) Tokukaisho 52-30487, the phosphors represented by $Li_2B_4O_7$:Cu, Ag etc., described in Japanese Patent Application Publication (Unexamined) Tokukaisho 53-39277, the phosphors such as $Li_2O \cdot (Be_2O_2)x$:Cu, Ag etc., described in Japanese Patent Application Publication (Unexamined) Tokukaisho 54-47883, the phosphors represented by SrS:Ce, Sm, SrS:Eu, Sm, $La_2O_2S$:Eu, Sm, and (Zn, Cd)S:Mnx, described in U.S. Pat. No. 3, 859, 527. Mention may also be made of the ZnS:Cu, Pb phosphor described in Japanese Patent Application Publication (Unexamined) Tokukaisho 55-12142, the barium aluminate phosphor represented by the formula $BaO \cdot Al_2O_3$:Eu, and the alkaline earth metal silicate phosphor represented by the formula $M(II)O \cdot xSiO_2$:A.

Examples further include the alkaline earth fluoride halide phosphor represented by the formula $(Ba_{1-x-y}Mg_x-Ca_y)F_x$: $Eu^{2+}$, described in Japanese Patent Application Publication (Unexamined) Tokukaisho 55-12143, the phosphor represented by the formula LnOX: xA, described in Japanese Patent Application Publication (Unexamined) Tokukaisho 55-12144, the phosphor represented by the formula $(Ba_{1-x}M(II)_x)FX$: yA, described in Japanese Patent Application Publication (Unexamined) Tokukaisho 55-12145, the phosphor represented by the formula BaFX: xCe, yA, described in Japanese Patent Application Publication (Unexamined) Tokukaisho 55-84389, the rare earth element activated divalent metal fluorohalide phosphor represented by the formula M(II) FX·xA: yLn, described in Japanese Patent Application Publication (Unexamined) Tokukaisho 55-160078, the phosphor represented by the formula ZnS:A, CdS:A, (Zn, Cd)S:A, X, the phosphor represented by any one of the following formulae:

$$xM_3(PO_4)_2 \cdot NX_2:yA$$

and

$$xM_3 (PO_4)_2:yA,$$

described in Japanese Patent Application Publication (Unexamined) Tokukaisho 59-38278, the phosphor represented by any one of the following formulae:

$$nReX_3 \cdot mAX'_2:xEu$$

and

$$nReX_3 \cdot mAX'_2:xEu, ySm,$$

described in Japanese Patent Application Publication (Unexamined) Tokukaisho 59-155487, the alkali halide phosphor represented by the following formula:

$$M(I)X \cdot aM(II)X'_2 \cdot bM(III)X''_3:cA,$$

described in Japanese Patent Application Publication (Unexamined) Tokukaisho 61-72087, and the bismuth-activated alkali halide phosphor represented by the formula M(I)X:xBi, described in Japanese Patent Application Publication (Unexamined) Tokukaisho 61-228400.

Particularly, alkali halide phosphors are preferable because columnar photostimulable phosphor layers can be formed easily according to the method such as deposition, sputtering, etc.

Further, among alkali halide phosphors, CsBr system phosphors are preferable because they have high luminance and therefore, the image quality becomes high, as described above.

[ Support]

The support according to the present invention will be explained.

As the support, various polymeric materials, glasses, ceramics, metals, carbon fibers, complex materials containing carbon fibers and the like are used. For example, plate glasses such as quartz, borosilicate glass, chemically-strengthened glasses, crystallized glasses and the like, or ceramics such as alumina, silicon nitride and the like, plastic films such as cellulose acetate film, polyester film, polyethylene terephthalate film, polyamide film, polyimide film, triacetate film, polycarbonate film and the like, metal sheets such as aluminum sheet, iron sheet, copper sheet, chromium sheet and the like, or metal sheets having a coating layer of hydrophilic fine particles are preferable. The surface of these supports may be smooth, or may be mat in order to improve the adhesiveness with the photostimulable phosphor layer. Further, in the present invention, in order to improve the adhesiveness of the support and the photostimulable phosphor layer, an adhesive layer may be provided on the surface of the support beforehand according to need.

(Film Thickness of Support)

The thickness of these supports differs according to the materials and the like of the support to be used. However, generally, it is between 80 µm and 8000 µm. From viewpoint of handling, between 80 µm and 5000 µm is further preferable.

EXAMPLES

Hereinafter, the present invention will be explained by referring to the Examples. However, the present invention is not limited to these Examples.

Example 1

[Preparation of Radiographic Image Conversion Panel No. 1]: Comparative Example

According to the method described below, a radiographic image conversion panel No. 1 having a deposition type phosphor layer was prepared.

(Preparation of Support 1)

On a transparent crystallized glass having a thickness of 500 µm, a light reflective layer was provided to prepare a support 1 as described below. The surface roughness (Ra) of the support 1 was 0.01.

(Formation of Light Reflective Layer)

Using titanium oxide produced by Furuuchi Chemical Corporation and zirconium oxide produced by Furuuchi Chemical Corporation, film formation was performed on the surface of the support by using a deposition apparatus such that the light reflective layer has a reflective index at 400 nm of 85% and a reflective index at 660 nm of 20%.

(Preparation of Photostimulable Phosphor Plate 1)

The support 1 prepared above was heated at 240°C and nitrogen gas was introduced into a vacuum chamber. After the degree of vacuum was adjusted to 0.27 Pa, deposition was performed by using a deposition apparatus well known to a person skilled in the art. In performing the deposition, an alkali halide phosphor comprising CsBr:0.001Eu was deposited on one surface of the support at an incident angle of 0° to the normal line direction of the support face by using a slit made of aluminum, by making the distance between the support and the slit (an evaporation source) to be 60 cm and by carrying the support toward the direction parallel to the longitudinal direction of the slit. Thus, a phosphor layer having a columnar structure with a thickness of 300 µm was formed.

A haze ratio of the phosphor layer formed above was measured according to the method described in ASTMD-1003, as a result, the haze ratio of the phosphor layer was 50%.

A radiographic image conversion panel No. 1 was prepared by using the photostimulable phosphor plate 1 prepared above. In detail, a protective layer made of glass was provided in a glass-like side edge portion having the photostimulable phosphor layer via a spacer. The protective layer was provided so that the thickness of an air layer as a layer having a low refractive index between each photostimulable phosphor layer and the glass used as the protective layer would be 100 µm. In addition, as the spacer, the one made of glass ceramics, and whose thickness was adjusted so that the photostimulable phosphor layer and the layer having a low refractive index (air layer) between the support and the protective layer glass would become a predetermined thickness was used. The side edge portions of the glass support and the protective layer made of glass were adhered by using an epoxy system adhesive, and a radiographic image conversion panel No.1 was prepared.

[Preparation of Radiographic Image Conversion Panel No. 2]:Comparative Example

A radiographic image conversion panel No. 2 was prepared in the same manner as the preparation of the radiographic image conversion panel No. 1 except that the deposition conditions were changed as described in Table 1.

[ Preparation of Radiographic Image Conversion Panel Nos. 3 to 6]: present invention

Respective radiographic image conversion panels Nos. 3 to 6 were prepared in the same manner as the preparation of the radiographic image conversion panel No. 1 except that the deposition conditions were changed as described in Table 1.
Incidentally, changes of the support temperature and the degree of vacuum in the deposition conditions described in Table 1 were performed when the columnar crystal formed on the support was grown to approximately 50% ($\pm$5%) of the columnar crystal length T preliminary set. Further, the time (also referred to as "a timing") of changes was determined on the basis of experimental data obtained by previously performing the follow-up check of the growth rate of crystals using an electron microscope or the like.

[ Preparation of Radiographic Image Conversion Panels Nos. 7 to 12 (present invention), Nos. 13 to 15 (Comparative Example)]

In preparation of the photostimulable phosphor plate of the radiographic image conversion panel No. 1, the phosphor layer was formed by changing the incident angle, to the normal line direction of the support surface, of the alkali halide phosphor comprising CsBr:0.001Eu such that the slope, to the normal line direction of the support surface, of the columnar crystal grown was 0° (panel No. 7), 5° (panel No. 8), 10° (panel No. 9) , 20° (panel No. 10), 35° (panel No. 11), 40° (panel No. 12) , 45° (panel No. 13), 60° (panel No. 14) and 80° (panel No. 15).
Each of the obtained radiographic image conversion panels Nos. 1 to 15 was evaluated on the luminescence luminance and the sharpness.

[Evaluation of Sharpness]

The sharpness was evaluated by obtaining the modulation transfer function (MTF).
After a CTF chart was stuck on each radiographic image conversion panel, 10 mR of 80 kVp X-ray (the distance to the subject: 1.5 m) was irradiated to the panel. Thereafter, the CTF chart was scanned and read by irradiating a semiconductor laser beam having a diameter of 100 $\mu$m$\phi$ (690 nm: the power on the panel was 40 mW) from the surface side having the phosphor layer A. Thus, the MTF was obtained. The values described in Table 1 are the values such that the MTF values of respective panels Nos. 1 to 6 are determined with a relative value by using the MTF value at 0. 5 lp/mm of the radiographic image conversion panel No. 5 as 1.00. The values described in Table 2 indicate the MTF values at 1.0 lp/mm of respective radiographic image conversion panels Nos. 7 to 15.

[Evaluation of Luminance (Sensitivity)]

Each of the radiographic image conversion panels Nos. 1 to 15 was measured on the luminance as follows.
In measurement of the luminance, each of the radiographic image conversion panels was irradiated with an X-ray having a tube voltage of 80 kVp from the rear surface side of the phosphor sheet support, and then, scanned and excited with a He-Ne laser beam (633 nm). The photostimulated luminescence emitted from the phosphor layer was received by a light receiver (a photomultiplier with spectral sensitivity of S-5), and then, its intensity was measured. The intensity obtained was defined as luminance. In table 1, the luminance of each panel is shown with a relative value by using the luminance of the radiographic image conversion panel No. 5 as 1.00. In table 2, the luminance of each panel is shown with a relative value by using the luminance of the radiographic image conversion panel No. 7 as 1.00.
The results from the effects caused by the number N of the obtained columnar crystals are shown in Table 1. The results from the effects caused by the growth angle of the columnar crystals are shown in Table 2.

Table 1

| Radiographic Image Conversion Panel No. | The number (N) | Luminance | Sharpness | Deposition Conditions | | | Remarks |
|---|---|---|---|---|---|---|---|
| | | | | Surface Roughness (Ra) | Support Temperature(°C) | Degree of Vacuum(Pa) | |
| 1 | 6000 | 0.54 | 1.56 | 0.20 | 25 | 0.27 | Comparative Example |
| 2 | 20 | 1.67 | 0.45 | 0.50 | 300 | 1.33 | Comparative Example |
| 3 | 55 | 1.33 | 0.76 | 0.20 | 200 | 0.13 | Present Invention |
| 4 | 200 | 1.24 | 0.86 | 0.02 | 200 | 0.13 | Present Invention |
| 5 | 925 | 1.00 | 1.00 | 0.20 | 100 | 1.33 | Present Invention |
| 6 | 3800 | 0.88 | 1.32 | 0.02 | 100 | 0.13 | Present Invention |

The number (N) : the number of columnar crystals per 100 $\mu m^2$ of the surface area of photostimulable phosphor layer

As can be seen from Table 1, as the number N of the columnar crystals per 100 $\mu m^2$ of the surface area of the photostimulable phosphor layer was more increased, the luminescence luminance was more decreased. However, as in the radiographic image conversion panel No. 1, when the number N was more than 4000 (Comparative Example), sufficient luminescence luminance could not be secured. Further, as the number N of the columnar crystals was more decreased, the sharpness was more decreased. However, as in the radiographic image conversion panel No. 2, when the number N of the columnar crystals was less than 50 (Comparative Example), sufficient sharpness could not be secured. That is, the luminescence luminance and the sharpness were antithetically increased or decreased according to the number N of the columnar crystals. However, as in the radiographic image conversion panels Nos. 3 to 6 of the present invention, when the number N of the columnar crystals was adjusted to $50 \leq N \leq 4000$, particularly, $100 \leq N \leq 2000$, both the luminescence luminance and the sharpness could be sufficiently secured.

Table 2

| Radiographic Image Conversion Panel No. | Growth Angle of Crystal(°C) | Luminance (Sensitivity) | Sharpness | Remarks |
|---|---|---|---|---|
| 7 | 0 | 1.00 | 0.60 | Present Invention |
| 8 | 5 | 1.00 | 0.59 | Present Invention |
| 9 | 10 | 0.97 | 0.58 | Present Invention |
| 10 | 20 | 0.95 | 0.57 | Present Invention |
| 11 | 35 | 0.93 | 0.55 | Present Invention |
| 12 | 40 | 0.90 | 0.52 | Present Invention |
| 13 | 45 | 0.83 | 0.45 | Comparative Example |
| 14 | 60 | 0.60 | 0.38 | Comparative Example |
| 15 | 80 | 0.40 | 0.20 | Comparative Example |

As shown in Table 2, as the growth angle of the columnar crystals of the radiographic image conversion panel was more increased, the luminescence luminance and the sharpness were more decreased. As in the radiographic image conversion panels Nos. 13 to 15, when the growth angle was more than 40° (Comparative Examples), the luminescence luminance and the sharpness were decreased in predominant degree, as a result, the luminescence luminance and the sharpness in the level of having the value as a product (sensitivity: 0.9 or more, sharpness: 0.5 or more) could not be secured. That is, as in the radiographic image conversion panels Nos. 7 to 12, when the growth angle of the columnar crystals was 40° or less, preferably 35° or less (radiographic image conversion panels Nos. 7 to 11) (present invention), both the luminescence luminance and the sharpness of the radiographic image conversion panels could be sufficiently secured.

The entire disclosure of Japanese Patent Application No. 2003-018564 filed on January 28, 2003 is incorporated herein by reference in its entirety.

**Claims**

1.   A radiographic image conversion panel comprising:

a support; and
at least one photostimulable phosphor layer provided on the support,

wherein the photostimulable phosphor layer comprises a photostimulable phosphor having a columnar crystal structure, and the number N of columnar crystals per 100 $\mu m^2$ of the surface area of the photostimulable phosphor layer satisfies a following Formula (1):

Formula (1)

$50 \leq N \leq 4000$.

2.   The panel of claim 1, wherein the number N of the columnar crystals satisfies a following Formula (2):

Formula (2)

$$100 \leq N \leq 2000.$$

3. The panel of claim 1 or 2, wherein the photostimulable phosphor layer having the columnar crystal structure is formed by a vapor phase deposition method.

4. The panel of any one of claims 1 to 3, wherein the photostimulable phosphor layer contains a photostimulable phosphor having a composition represented by a following Formula (3) :

Formula (3)

$$M^{I}X \cdot aM^{II}X'_2 \cdot bM^{III}X''_3 : eA$$

wherein the $M^{I}$ is at least one kind of alkali metal selected from a group consisting of Li, Na, K, Rb and Cs, the $M^{II}$ is at least one kind of bivalent metal selected from a group consisting of Be, Mg, Ca, Sr, Ba, Zn, Cd and Ni, the $M^{III}$ is at least one kind of trivalent metal selected from a group consisting of Sc, Y, La, Ce, Pr, Nd, Pm, Sm, Eu, Gd, Tb, Dy, Ho, Er, Tm, Yb, Lu, Al, Ga and In, each of the X, the X' and the X'' is at least one kind of halogen selected from a group consisting of F, Cl, Br and I, the A is at least one kind of metal selected from a group consisting of Eu, Tb, In, Ga, Cs, Ce, Tm, Dy, Pr, Ho, Nd, Yb, Er, Gd, Lu, Sm, Y, Tl, Na, Ag, Cu and Mg, and each of the a, the b and the e represents a numeric value in a range of $0 \leq a < 0.5$, $0 \leq b < 0.5$ and $0 < e \leq 0.2$.

5. The panel of claim 4, wherein the $M^{I}$ in Formula (3) above is at least one kind of alkali metal selected from a group consisting of K, Rb and Cs.

6. The panel of claim 4 or 5, wherein the X in the Formula (3) is Br or I.

7. The panel of any one of claims 4 to 6, wherein the $M^{II}$ in the Formula (3) is at least one kind of bivalent metal selected from a group consisting of Be, Mg, Ca, Sr and Ba.

8. The panel of any one of claims 4 to 7, wherein the $M^{III}$ in the Formula (3) is at least one kind of trivalent metal selected from a group consisting of Y, La, Ce, Sm, Eu, Gd, Lu, Al, Ga and In.

9. The panel of any one of claims 4 to 8, wherein the b in the Formula (3) represents a numeric value in a range of $0 \leq b \leq 10^{-2}$.

10. The panel of any one of claims 4 to 9, wherein the A in the Formula (3) is at least one kind of metal selected from a group consisting of Eu, Cs, Sm, Tl and Na.

11. The panel of any one of claims 1 to 10, wherein the photostimulable phosphor layer contains a photostimulable phosphor having a composition represented by a following Formula (4) :

Formula (4)

CsBr:yEu

wherein the y represents a numeric value in a range of $1 \times 10^{-7}$ to $1 \times 10^{-2}$.

12. The panel of claim 3, wherein a growth angle of the columnar crystals is from 0° to 40°.

13. The panel of claim 12, wherein a growth angle of the columnar crystals is from 0° to 35°.

# FIG.1

SUPPORT

EP 1 443 526 A2